# EUROPÄISCHE PATENTSCHRIFT

(11) **EP 0 642 295 B1**
(45) Veröffentlichungstag und Bekanntmachung des Hinweises auf die Patenterteilung: **22.07.1998**
(21) Anmeldenummer: 94112535.3
(22) Anmeldetag: 10.08.1994
(51) Int. Cl.: H05B 41/29, H02M 1/00

(54) **Elektronisches Vorschaltgerät zum Versorgen einer Last, beispielsweise einer Lampe**
Electronic ballast for a load, for example a discarge lamp
Ballast électronique pour alimenter une charge, par exemple une lampe à décharge

(30) Priorität: 03.09.1993 DE 4329821
(43) Veröffentlichungstag der Anmeldung: 08.03.1995
(73) Patentinhaber: Tridonic Bauelemente GmbH, 6850 Dornbirn (AT)
(72) Erfinder: Groiss, Stefan, A-6850 Dornbbirn (AT)
(74) Vertreter: Schmidt-Evers, Jürgen, Dipl.-Ing.

(56) Entgegenhaltungen:
- EP-A- 0 435 628
- US-A- 5 224 025

## Beschreibung

Die Erfindung betrifft ein elektronisches Vorschaltgerät zum Versorgen einer Last, beispielsweise einer Lampe, insbesondere einer Gasentladungslampe, mit einer Wechselspannung, deren Frequenz höher als die Netzfrequenz ist, mit einem an das Wechselstromnetz anzuschließenden Gleichrichter, einem diesem nachgeschalteten zwei Schalter aufweisenden Wechselrichter, der die höherfrequente Wechselspannung für die Last erzeugt und einem zwischen dem Gleichrichter und dem Wechselrichter angeordneten elektronischen Oberwellenfilter, in Form eines getakteten Schaltreglers.

Insbesondere bezieht sich die Erfindung auf ein elektronisches Vorschaltgerät, bei dem das elektronische Oberwellenfilter aus einem getakteten Schaltregler in Form eines invertierenden Wandlers (Inverswandler) besteht.

Gasentladungslampen haben beim Betrieb mit Netzfrequenz eine unbefriedigende Lichtausbeute und neigen zum Flimmern. Aus diesem Grunde werden sie in der Regel mit elektronischen Vorschaltgeräten betrieben, die bei Netzspannung arbeiten und daraus eine höherfrequente Betriebsspannung für die Gasentladungslampen erzeugen, deren Frequenz im Bereich von 20 bis 50 kHz liegt. Die elektronischen Vorschaltgeräte enthalten einen Gleichrichter, der die Netzspannung gleichrichtet und einen Wechselrichter, der aus der gleichgerichteten Netzspannung die höherfrequente Betriebsspannung erzeugt. Durch die Verwendung von elektronischen Vorschaltgeräten kann die Lichtausbeute der Gasentladungslampen zwar beachtlich gesteigert und ein Flimmern vermieden werden; gleichzeitig tritt jedoch das Problem auf, daß infolge der Gleichrichtung Oberwellen entstehen, die bei Rückstrahlung ins Netz unzulässige Störungen verursachen. Um dies zu vermeiden, kann zu dem Gleichrichter und dem Netz ein passives Filter geschaltet werden, das jedoch eine relativ große und teuere Drossel enthalten muß. Diese Drossel kann vermieden werden, wenn an Stelle des passiven Filters zwischen Gleichrichter und Wechselrichter ein elektronisches Oberwellenfilter geschaltet wird. Das elektronische Oberwellenfilter, das in der Regel in Form eines getakteten Schaltreglers ausgebildet ist, zeichnet sich dadurch aus, daß es dem Gleichrichter pulsförmig Strom entnimmt, wobei die Hüllkurve der Stromimpulse einer Sinushalbwellen-Form mit Netzfrequenz angenähert ist.

Ein solches Oberwellenfilter ist beispielsweise in der EP 268 043 A1 oder in dem Buch von C. H. STURM/E. KLEIN, "Betriebsgeräte und Schaltungen für Lampen", Verlag Siemens AG, 6. Auflage, 1992, Seiten 127/128, beschrieben. Das elektronische Oberwellenfilter besteht aus einem getakteten Schaltregler, der beispielsweise ein Aufwärts-Wandler (Hochsetzsteller) oder ein invertierender Wandler sein kann. Das Prinzip eines solchen getakteten Schaltreglers ist ebenfalls in dem Buch von U. STIETZE, CH. SCHENK, "Halbleiterschaltungstechnik", Springer Verlag, 9. Auflage, Seiten 563 bis 570 beschrieben. Bei den bekannten Oberwellenfilter wird die Ausgangsspannung des Schaltreglers ständig überwacht und mit einer festen Sollwertspannung verglichen. Der Regler erzeugt aus der Regeldifferenz ein Regelsignal variabler Schaltfrequenz für den Schalter des Schaltreglers.

Aus der Kombination der bekannten Teilschaltungen ergibt sich für das elektronische Vorschaltgerät der Funktion nach ein Schaltungsaufbau, der aus einem Gleichrichter, aus einem elektronischen Oberwellenfilter und aus einem Wechselrichter besteht. Hierbei zeigt sich, daß ein derart aufgebautes elektronisches Oberwellenfilter insbesondere beim Einsatz für einzelne Lampen vom Schaltungsaufbau her zu aufwendig ist und zu untragbaren Herstellungskosten führt.

Es wurden daher elektronische Vorschaltgeräte mit Oberwellenfiltern in Form von Aufwärts-Wandlern (Hochsetzsteller) vorgeschlagen, bei denen der Regelschalter des getakteten Schaltreglers gleichzeitig einen der beiden Wechselrichter-Schalter bildet. Derartige Schaltungen sind beispielsweise aus der US-A-5 224 025 oder der EP-A-0 435 628 bekannt.

Der Erfindung liegt die Aufgabe zugrunde, ein elektronisches Vorschaltgerät der eingangs beschriebenen Art mit einem zwischen dem Gleichrichter und dem Wechselrichter geschalteten elektronischen Oberwellenfilter, das insbesondere in Form eines invertierenden Wandlers (Inverswandler) ausgestaltet ist, so zu modifizieren, daß es mit minimiertem Schaltungsaufwand herstellbar ist.

Die Aufgabe ist erfindungsgemäß dadurch gelöst, daß der Regelschalter des als invertierender Wandler (Inverswandler) ausgebildeten getakteten Schaltreglers gleichzeitig einen der beiden Schalter des Wechselrichters bildet.

Wie ansich bekannt, weist der als invertierender Wandler (Inverswandler) ausgebildete Schaltregler des elektronischen Oberwellenfilters eine erste Impedanz in Form einer Spule und einen Regelschalter auf, die eine zum Gleichrichter parallel geschaltete Serienschaltung bilden und wobei der ersten Impedanz eine zweite Impedanz parallel geschaltet ist, die mittels zumindest einer Diode von dem Gleichrichter entkoppelt ist. Immer dann, wenn der Regelschalter geöffnet wird, wird die bei geschlossenem Regelschalter in der ersten Impedanz gespeicherte Energie auf die zweite Impedanz umgeladen. Nunmehr kann an der zweiten Impedanz über einen Wechselrichter eine Last betrieben werden, wobei einer der Strompfade des üblichen Wechselrichters über den Regelschalter des Oberwellenfilters führbar ist. Auf diese Weise wird nicht nur der zweite Schalter für den Wechselrichter eingespart, sondern auch die für diesen erforderliche Treiberschaltung, wodurch das elektronische Vorschaltgerät platzsparender und kostengünstiger herstellbar ist.

Gemäß einer bevorzugten Ausgestaltung der Erfindung ist der andere der beiden Wechselrichter-Schalter parallel zu der zweiten Impedanz geschaltet.

Weitere vorteilhafte Ausgestaltungen der Erfindung sind in den Unteransprüchen angegeben.

Nachfolgend wird die Erfindung anhand von Ausführungsbeispielen unter Bezugnahme auf die Zeichnung ausführlich beschrieben.

Es zeigen:
- Figur 1: ein erstes Ausführungsbeispiel zur Darstellung des Funktionsprinzipes,
- Figur 2: ein zweites, weiter vereinfachtes Ausführungsbeispiel mit im Vergleich zu Figur 1 umgekehrter Polarität und
- Figur 3: ein weiteres Ausführungsbeispiel für den Einsatz bei Gasentladungslampen.

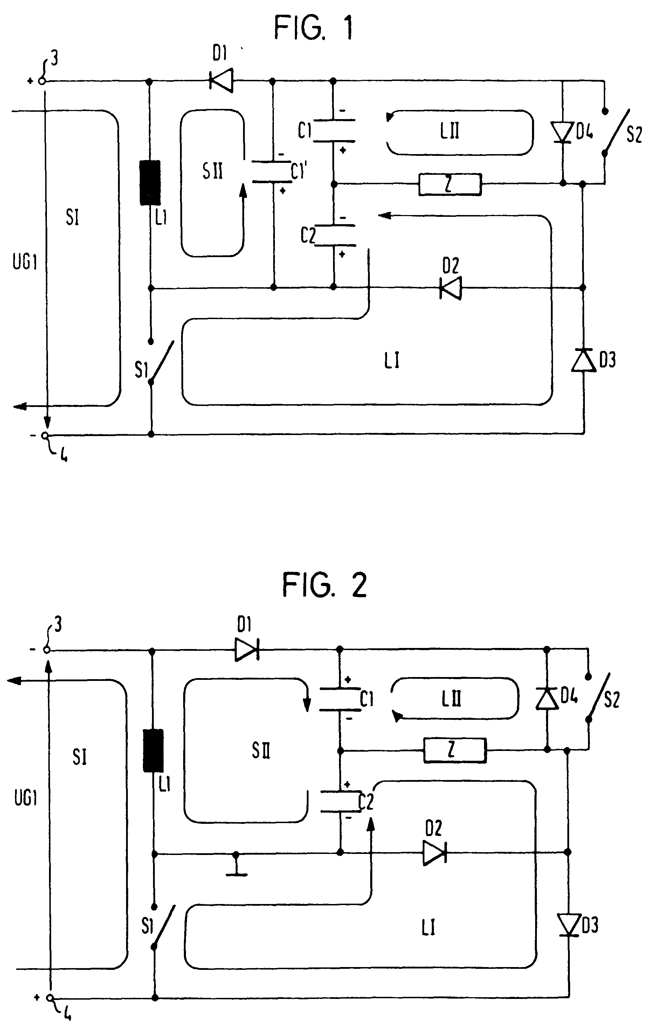

Im ersten Ausführungsbeispiel, das in Figur 1 dargestellt ist, ist eine Serienschaltung bestehend aus der Spule L1 und dem Schalter S1 an den Anschlüssen 3 und 4 mit einer Gleichspannungsquelle (nicht dargestellt) verbunden. Sobald der Schalter S1 geschlossen ist, fließt ein Strom durch die Spule L1. Somit ergibt sich ein Stromfluß, wie er mit SI bezeichnet ist. Parallel zur Spule L1 ist eine Serienschaltung geschaltet, die aus einer Diode D1 und einem Kondensator C1' gebildet ist. Die Diode ist so gepolt, daß sie die an den Punkten 3 und 4 anliegende Gleichspannung UG1 sperrt. Sobald der Schalter S1 öffnet, fällt an der Spule L1 gemäß der Gleichung: U(t) =-1/L*(di/dt) eine Spannung ab, die zu der an den Punkten 3 und 4 anliegenden Spannung eine umgekehrte Polarität aufweist. Aufgrund der Spulenspannung wird die bei geschlossenem Schalter S1 in der Spule gespeicherte elektrische Energie nunmehr über die Diode D1 auf den Kondensator C1' überführt, wobei die am Kondensator C1' anliegende Spannung gegenüber der Gleichspannung UG1 eine umgekehrte Polarität aufweist. Parallel zu dem Kondensator C1' ist eine Serienschaltung aus zwei Kondensatoren C1 und C2 geschaltet, die gleich groß sind und die somit die Spannung, die am Kondensator C1' anliegt, symmetrisch aufteilen. Am die Kondensatoren C1 und C2 verbindenden Knotenpunkt ist ein Anschluß einer Last Z angeschlossen. Am anderen Ende der Last Z ist ein Schalter S2 angeschlossen, der mit seinem anderen Anschluß an der Seite des Kondensators C1' angeschlossen ist, die mit der Diode D1 verbunden ist. Der Schalter S2 hat die Funktion eines von zwei Schaltern eines Wechselrichters, während der Schalter S1 die Funktion des zweiten Schalters des Wechselrichters übernimmt. Sind die Kondensatoren C1 und C2 bzw. C1' aufgeladen, so kann der Schalter S2 geschlossen werden, wobei sich der Kondensator C1 über die Last Z entlädt und einen Stromfluß bildet, der mit LII bezeichnet ist. Öffnet der Schalter S2, so wird der Schalter S1 geschlossen, so daß der Kondensator C2 sich über die Last Z einer Diode D3 und den Schalter S1 entlädt. Die Diode D3 ist mit der Last Z und dem Anschluß 4 verbunden und so gepolt, daß sie die am Anschluß 4 anliegende Spannung bei geschlossenem Schalter S2 in Richtung auf den Knotenpunkt, der die Diode D1 und den Kondensator C1' verbindet, sperrt, jedoch einen Laststrom, der mit LI bezeichnet ist, zuläßt. Der Schalter S1 führt somit gleichzeitig den Strom, der zum Speichern von Energie in der Spule L1 führt und den Laststrom LI. Wenn der Schalter S1 geöffnet und der Schalter S2 geschlossen ist, erfolgt gleichzeitig das Aufladen der Kondensatoren C1', C1 und C2 sowie der Betrieb mit dem Laststrom LII. Die in Figur 1 angegebenen Dioden D4 und D2 bilden für die Schalter S2 bzw. S1 jeweilige Freilaufdioden, die die Schalter vor Überspannung mit falscher Polarität in an und für sich bekannter Weise schützen, wenn diese Schalter beispielsweise Halbleiterschalttransistoren sind.

Figur 2 zeigt ein Ausführungsbeispiel, das dein in Figur 1 gezeigten Ausführungsbeispiel weitgehend entspricht. Der Unterschied besteht darin, daß die Polarität der an den Anschlüssen 3 und 4 angeschlossenen Gleichspannung im Vergleich zu Figur 1 umgekehrt ist. Daraus ergibt sich gleichzeitig eine umgekehrte Polung der Dioden D1 bis D4. Die in Figur 1 dargestellte, aus den Kondensatoren C1', C1 und C2 bestehende Anordnung kann, wie in Figur 2 dargestellt, durch zwei Kondensatoren C1 und C2 ersetzt werden, wobei diese dann bei entsprechender Dimensionierung die energiespeichernde Funktion des Kondensators C1' gemäß Figur 1 übernehmen. Neben der Einsparung eines Kondensators ist das in Figur 2 dargestellte Ausführungsbeispiel dahingehend vorteilhaft, daß sich am Knotenpunkt, der die Spule L1, den Schalter S1 und den Kondensator C2 verbindet, ein Massepunkt bildet, der für eine nicht dargestellte Steuerschaltung zum Steuern der Schalter S1 und S2 ebenfalls geeignet ist.

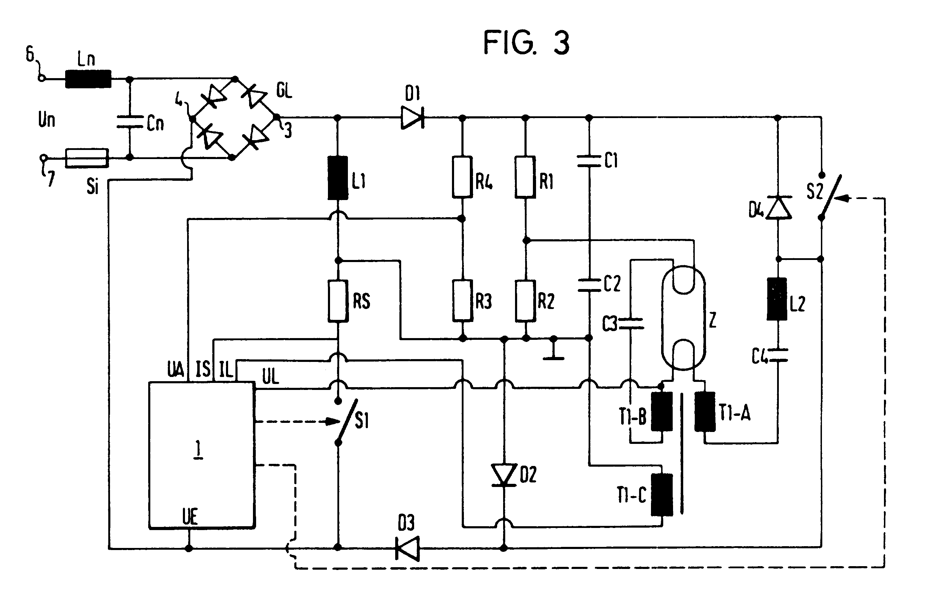

Figur 3 zeigt ein Ausführungsbeispiel, das dem in Figur 2 angenähert ist, wobei es für den Einsatz in einem elektronischen Vorschaltgerät für Gasentladungslampen angepaßt ist. An den Anschlüssen 3 und 4 ist ein Brückengleichrichter angeschlossen, der eine an den Anschlüssen 6 und 7 anliegende Wechselnetzspannung Un gleichrichtet. Als Netzfilter sind gleichzeitig eine Spule Ln und ein Kondensator Cn vorgesehen. Weiterhin ist ebenfalls am Anschluß 7 eine Sicherung Si vorgesehen. An den Anschlüssen 3 und 4 ergibt sich somit eine mit Netzfrequenz pulsierende Gleichspannung. Die in den Figuren 1 und 2 angegebene Last Z ist in diesem Ausführungsbeispiel durch eine Gasentladungslampe ersetzt, wobei die Spule L2 und der Kondensator C3 die für den Betrieb der Gasentladungslampen notwendigen Resonanzkreis bilden. Der Kondensator C3 führt den über die Heizwendel der Gasentladungslampe fließenden Vorheizstrom, wobei ein drei Spulen aufweisender Übertrager T so geschaltet ist, daß sich die Durchflutung, die durch den Heizstrom erzeugt wird, selbst eliminiert und nur die von dem Lampenstrom herrührende Durchflutung wirksam bleibt. Somit fließt in der Spule T1-C ein dem Lampenstrom IL proportionaler Strom und ein entsprechender Spannungswert kann an der Spule T1-C abgegriffen werden. Dieser Spannungswert wird einer zum Steuern der Schalter S1 und S2 vorgesehenen zentralen Steuerschaltung 1 als Parameter IL zugeführt. Gleichzeitig wird der Steuerschaltung 1 als Parameter UL die Lampenspannung zugeführt, als Parameter UE die Spannung an den Punkten 3 und 4 zugeführt, als Parameter Is die über dem Widerstand RS abfallende Spannung zugeführt, die dem Strom durch den Schalter S1 entspricht, und die Ausgangsspannung, die über der Serienschaltung der beiden Kondensatoren C1 und C2 abfällt, als Parameter UA zugeführt. Hierbei wird die Spannung UA mittels eines Spannungsteilers, der aus der Serienschaltung der Widerstände R4 und R3 besteht, in einen Wertebereich gewandelt, der für die zentrale Steuerschaltung geeignet ist. Auf diese Weise können alle Parameter erfaßt werden, die dafür notwendig sind, uni die Schalter S1 und S2 so zu schalten, daß in Abhängigkeit vom Betriebszustand der Lampe, der den Gleichrichter GL belastende pulsierende Strom stets die Hüllkurve einer Sinushalbwelle aufweist.

Gleichzeitig dienen die Parameter der Überwachung des gesicherten Schaltungsbetriebes, so daß schnell ein fehlerhafter Betrieb erkennbar ist.

Neben dem Einsatz für Gasentladungslampen können die Schaltungen gemäß der Figuren 1 und 2 ebenfalls für den Betrieb von Niedervolthalogenlampen verwendet werden. Hierbei wird die Primärseite eines üblicherweise für den Betrieb von Niedervolthalogenlampen verwendeten Übertragers an die Stelle der Last Z eingesetzt.

## Patentansprüche

1. Elektronisches Vorschaltgerät zum Versorgen einer Last, beispielsweise einer Lampe, insbesondere einer Gasentladungslampe, mit einer Wechselspannung (Un), deren Frequenz höher als die Netzfrequenz ist, mit
- einem an das Wechselstromnetz anzuschließenden Gleichrichter (G1),
- einem diesem nachgeschalteten zwei Schalter (S2, S1) aufweisenden Wechselrichter, der die höherfrequente Wechselspannung für die Last (Z) erzeugt, und
- einem zwischen dein Gleichrichter (G1) und dem Wechselrichter angeordneten elektronischen Oberwellenfilter, in Form eines getakteten Schaltreglers, wobei der Schaltregler durch einen invertierenden Wandler gebildet ist und eine in Serie mit dem Regelschalter (S1) des getakteten Schaltreglers angeordnete erste Impedanz (L1) und eine parallel zu der ersten Impedanz (L1) angeordnete Serienschaltung aus einer ersten Diode (D1) und einer zweiten Impedanz (C1, C2; C1') aufweist,
**dadurch gekennzeichnet,**
daß der Regelschalter (S1) des getakteten Schaltreglers gleichzeitig einen der beiden Schalter (S1) des Wechselrichters bildet.

2. Elektronisches Vorschaltgerät nach Anspruch 1,
**dadurch gekennzeichnet,**
daß der andere der beiden Schalter (S2) des Wechselrichters parallel zu der zweiten Impedanz (C1, C2; C1') geschaltet ist.

3. Elektronisches Vorschaltgerät nach Anspruch 2,
**dadurch gekennzeichnet,**
daß die zweite Impedanz von zwei in Serie geschalteten Teilimpedanzen (C1, C2) gebildet ist,
daß die Last einerseits mit dem Verbindungspunkt der beiden Teilimpedanzen (C1, C2) und andererseits über eine zweite Diode (D2) mit dem mit der ersten Impedanz verbundenen Anschluß des Regelschalters (S1) verbunden ist und ferner über eine dritte Diode (D3) mit dem der ersten Impedanz (L1) abgewandten Anschluß des Regelschalters (S1) verbunden ist, und
daß der andere der beiden Schalter (S2) des Wechselrichters von einer vierten Diode (D4) überbrückt ist, wobei die Polaritäten der ersten und der dritten Diode so gewählt sind, daß die zweite Impedanz von dem Gleichrichter (G1) gleichstrommäßig entkoppelt ist, und die Polaritäten der zweiten und der vierten Diode so gewählt sind, daß sie für die beiden Schalter (S1, S2) jeweils eine Freilaufdiode bilden.

4. Elektronisches Vorschaltgerät nach Anspruch 3,
**dadurch gekennzeichnet,**
daß die Teilimpedanzen der zweiten Impedanz mit Kondensatoren gebildet sind.

5. Elektronisches Vorschaltgerät nach Anspruch 4,
**dadurch gekennzeichnet,**
daß parallel zu der Serienschaltung aus zwei mit Kondensatoren gebildeten Teilimpedanzen ein einzelner Kondensator geschaltet ist.

6. Elektronisches Vorschaltgerät nach Anspruch 4 oder 5,
**dadurch gekennzeichnet,**
daß jedem der beiden Kondensatoren (C1, C1') jeweils ein Widerstand (R1, R2) parallel geschaltet ist, wobei die Widerstände die Spannung über der zweiten Impedanz gleichmäßig auf die beiden die Teilimpedanzen bildenden Kondensatoren aufteilen und diese bei ausgeschalteten Gerät entladen.

7. Elektronisches Vorschaltgerät nach einem der vorhergehenden Ansprüche,
**dadurch gekennzeichnet,**
daß ein zentraler Steuerschaltkreis (1) vorgesehen ist, der basierend auf zugeführten Steuerparametern Steuersignale für den Regelschalter (S1) und den anderen Schalter (S2) des Wechselrichters ausgibt.

8. Elektronisches Vorschaltgerät nach Anspruch 7,
**dadurch gekennzeichnet,**
daß einer der Steuerparameter die vom Gleichrichter (G1) abgegebene Eingangsspannung (Ue) ist.

9. Elektronisches Vorschaltgerät nach Anspruch 7 oder 8,
**dadurch gekennzeichnet,**
daß einer der Steuerparameter der Strom (IS) durch den Regelschalter (S1) ist, der mittels eines Meßwiderstandes (Rs) erfaßt wird.

10. Elektronisches Vorschaltgerät nach einem der Ansprüche 7 bis 9,
**dadurch gekennzeichnet,**
daß einer der Steuerparameter die Ausgangsspannung (UA) des Schaltreglers ist, die mittels eines Spannungsteilers (R3, R4) in einem für den zentralen Steuerschaltkreis (1) geeigneten Spannungsbereich gewandelt wird.

11. Elektronisches Vorschaltgerät nach Anspruch 10,
**dadurch gekennzeichnet,**
daß der Spannungsteiler ein ohmscher Spannungsteiler ist.

12. Elektronisches Vorschaltgerät nach einem der Ansprüche 7 bis 11,
**dadurch gekennzeichnet,**
daß einer der Steuerparameter der Laststrom (IL) ist, der mittels eines induktiven Aufnehmers (T1A-T1C) erfaßt wird.

13. Elektronisches Vorschaltgerät nach einem der Ansprüche 7 bis 12,
**dadurch gekennzeichnet,**
daß einer der Steuerparameter die Spannung (UL) über der Last (Z) ist.

## Claims

1. Electronic ballast for a load, for example a lamp, in particular a gas discharge lamp, with an alternating voltage (Un), the frequency of which is higher than the mains frequency, with
- a rectifier (G1) to be connected to the alternating current system,
- an inverter with two switches (S2, S1) connected in series to this, which inverter produces the higher-frequency alternating voltage for the load (Z), and
- an electronic harmonic filter in the form of a clocked switching controller disposed between the rectifier (G1) and the inverter, the switching controller being formed by an inverting converter and having a first impedor (L1) arranged in series with the step switch (S1) of the clocked switching controller and a series circuit disposed parallel to the first impedor (L1) and consisting of a first diode (D1) and a second impedor (C1, C2; C1'), characterized in that the step switch (S1) of the clocked switching controller forms one of the two switches (S1) of the inverter at the same time.

2. Electronic ballast according to claim 1, characterized in that the other of the two switches (S2) of the inverter is connected parallel to the second impedor (C1, C2; C1').

3. Electronic ballast according to claim 2, characterized in that the second impedor is formed by two partial impedors (C1, C2) connected in series, that the load is connected on the one hand to the junction point of the two partial impedors (C1, C2) and on the other hand via a second diode (D2) to the terminal of the step switch (S1) connected to the first impedor and is also connected via a third diode (D3) to the terminal of the step switch (S1) facing away from the first impedor (L1), and that the other of the two switches (S2) of the inverter is bridged by a fourth diode (D4), the polarities of the first and third diode being selected such that the second impedor is decoupled from the rectifier (G1) direct-current-wise, and the polarities of the second and fourth diode being selected such that they each form a freewheeling diode for the two switches (S1, S2) respectively.

4. Electronic ballast according to claim 3, characterized in that the partial impedors of the second impedor are formed by capacitors.

5. Electronic ballast according to claim 4, characterized in that a single capacitor is connected parallel to the series circuit of two partial impedors formed by capacitors.

6. Electronic ballast according to claim 4 or 5, characterized in that connected in parallel to each of the two capacitors (C1, C1') respectively is a resistor (R1, R2), the resistors distributing the voltage across the second impedor equally to the two capacitors forming the partial impedors and discharging these when the device is switched off.

7. Electronic ballast according to one of the preceding claims, characterized in that a central control circuit (1) is provided, which outputs control signals for the step switch (S1) and the other switch (S2) of the inverter based on control parameters supplied.

8. Electronic ballast according to claim 7, characterized in that one of the control parameters is the input voltage (Ue) supplied by the rectifier (G1).

9. Electronic ballast according to claim 7 or 8, characterized in that one of the control parameters is the current (IS) through the step switch (S1), which is detected by means of a measuring shunt (Rs).

10. Electronic ballast according to one of claims 7 to 9, characterized in that one of the control parameters is the output voltage (UA) of the switching controller, which is converted by means of a voltage divider (R3, R4) into a voltage range suitable for the central control circuit (1).

11. Electronic ballast according to claim 10,
characterized in that the voltage divider is a potentiometer-type resistor.

12. Electronic ballast according to one of claims 7 to 11, characterized in that one of the control parameters is the load current (IL), which is detected by means of an inductive sensor (T1A-T1C).

13. Electronic ballast according to one of claims 7 to 12, characterized in that one of the control parameters is the voltage (UL) across the load (Z).

## Revendications

1. Ballast électronique pour l'alimentation d'une charge, par exemple d'une lampe, en particulier d'une lampe à décharge dans un gaz, avec une tension alternative (Un) de fréquence plus élevée que la fréquence du réseau, comprenant
- un redresseur (G1) destiné à être raccordé au réseau à courant alternatif,
- un onduleur faisant suite au redresseur, présentant deux interrupteurs (S2,S1) et produisant la tension alternative de fréquence plus élevée pour la charge (Z), et
un filtre électronique à harmoniques disposé entre le redresseur (G1) et l'onduleur, sous la forme d'un régulateur de commutation cadencé, le régulateur de commutation étant constitué par un convertisseur inverseur et présentant une première impédance (L1) disposée en série avec l'interrupteur de régulation (S1) du régulateur de commutation cadencé, et un circuit série monté en parallèle avec la première impédance (L1) et composé d'une première diode (D1) et d'une deuxième impédance (C1, C2; C1'),
**caractérisé par le fait**
que l'interrupteur de régulation (S1) du régulateur de commutation cadencé constitue simultanément l'un des deux interrupteurs (S1) de l'onduleur.

2. Ballast électronique suivant la revendication 1,
**caractérisé par le fait**
que l'autre des deux interrupteurs (S2) de l'onduleur est monté en parallèle avec la deuxième impédance (C1, C2; C1').

3. Ballast électronique suivant la revendication 2,
**caractérisé par le fait**
que la deuxième impédance est formée de deux impédances partielles (C1, C2) montées en série,
que la charge est reliée d'une part au point de liaison des deux impédances partielles (C1, C2), d'autre part par une deuxième diode (C2) à la connexion de l'interrupteur de régulation (S1) reliée à la première impédance et, en outre, par une troisième diode (D3) à la connexion de l'interrupteur de régulation (S1) opposée à la première impédance (L1), et
que l'autre des deux interrupteurs (S2) de l'onduleur est shunté par une quatrième diode (D4), les polarités de la première et de la troisième diodes étant choisies de manière que la deuxième impédance soit découplée du point de vue courant alternatif du redresseur (G1) et les polarités de la deuxième et de la quatrième diodes sont choisies de manière que ces diodes constituent respectivement une diode roue libre pour les deux interrupteurs (S1,S2).

4. Ballast électronique suivant la revendication 3,
**caractérisé par le fait**
que les impédances partielles de la deuxième impédance sont formées par des condensateurs.

5. Ballast électronique suivant la revendication 4,
**caractérisé par le fait**
qu'un unique condensateur est monté en parallèle avec le circuit série des deux impédances partielles formées par des condensateurs.

6. Ballast électronique suivant la revendication 4 ou 5,
**caractérisé par le fait**
qu'une résistance (R1, R2) est montée respectivement en parallèle avec chacun des deux condensateurs (C1, Cl'), les résistances divisant la tension aux bornes de la deuxième impédance uniformément sur les deux condensateurs formant les impédances partielles et déchargeant ces condensateurs lorsque le ballast est hors service.

7. Ballast électronique suivant l'une des revendications précédentes,
**caractérisé par le fait**
qu'il est prévu un circuit de commutation de commande (1) central qui, sur la base de paramètres de commande appliqués, émet des signaux de commande pour l'interrupteur de régulation (S1) et l'autre interrupteur (S2) de l'onduleur.

8. Ballast électronique suivant la revendication 7,
**caractérisé par le fait**
que l'un des paramètres de commande est constitué par la tension d'entrée (Ue) fournie par le redresseur (G1).

9. Ballast électronique suivant la revendication 7 ou 8,
**caractérisé par le fait**
que l'un des paramètres de commande est constitué par le courant (IS) traversant l'interrupteur de régulation (S1), ce courant étant détecté à l'aide d'une résistance de mesure (Rs).

10. Ballast électronique suivant l'une des revendications 7 à 9,
**caractérisé par le fait**
que l'un des paramètres de commande est constitué par la tension de sortie (UA) du régulateur de commutation, laquelle est transformée à l'aide d'un diviseur de tension (R3, R4) dans une plage de tension appropriée pour le circuit de commutation de commande (1) central.

11. Ballast électronique suivant la revendication 10,
**caractérisé par le fait**
que le diviseur de tension est un diviseur de tension ohmique.

12. Ballast électronique suivant l'une des revendications 7 à 11,
**caractérisé par le fait**
que l'un des paramètres de commande est constitué par le courant de charge (IL) qui est détecté à l'aide d'un capteur inductif (T1A-T1C).

13. Ballast électronique suivant l'une des revendications 7 à 12,
**caractérisé par le fait**
que l'un des paramètres de commande est constitué par la tension (UL) aux bornes de la charge (Z).
